# EUROPEAN PATENT APPLICATION

(11) **EP 2 189 655 A1**
(43) Date of publication of application: **26.05.2010**
(21) Application number: 07765847.4
(22) Date of filing: 04.05.2007
(51) Int. Cl.: F03D 7/02, H02P 7/28

(54) **SYSTEM AND METHOD FOR CONTROL OF PITCH FOR WIND TURBINES**

(71) Applicant: Ingeteam Energy, S.A., 31621 Sarriguren, Navarra (ES)
(72) Inventor: GARMENDIA OLARREAGA, Iker, E-31008 Pamplona (ES); SOLE LOPEZ, David, E-31008 Pamplona (ES); BEORLEGUI ARANGUREN, Ernesto, E-31008 Pamplona (ES); MAYOR LUSARRETA, Jesús, E-31008 Pamplona (ES); ACEDO SANCHEZ, Jorge, E-31008 Pamplona (ES); PEREZ BARBACHANO, Javier, E-31008 Pamplona (ES); CARCAR MAYOR, Ainhoa, E-31008 Pamplona (ES); ZABALETA MAETZU, Mikel, E-31008 Pamplona (ES); ELORRIAGA LLANOS, Josu, E-31008 Pamplona (ES); COLOMA CALAHORRA, Javier, E-31008 Pamplona (ES); RIVAS BARRICARTE, Gregorio, E-31008 Pamplona (ES)
(74) Representative: Carpintero Lopez, Francisco
(86) International application number: PCT/ES2007/000264
(87) International publication number: WO 2008/135605

(57) **Abstract**

The present invention describes a pitch control system comprising a principal converter, and auxiliary converter, a direct current motor and a power storage system (accumulator) and has four different operation modes: normal, fault (first level), fault (second level) and emergency. In the case that a fault is detected, the system can move the motor in order to move the vanes to the desired position by making a controlled adjustment.

## Description

### FIELD OF THE INVENTION

The present invention relates to a pitch control system, the purpose of which is to regulate the blade pitch angle and which is particularly applicable to wind generators.

### BACKGROUND OF THE INVENTION

In recent years the introduction of wind energy has increased considerably and it is to be expected that this growth will continue over the years to come. At present, the nominal power of wind generators is progressively increasing, and consequently the installed capacity of wind farms is increasingly high. Wind farms require higher power wind generators that minimise the service and maintenance cost whilst reducing the environmental impact. This is particularly important in the case of offshore wind farms.

Pitch control systems are vitally important in the overall operation of the wind generator as they make it possible to alter the blade pitch in a controlled manner, taking the wind generator from a standstill to nominal power and making it possible to adjust the blade angle to maintain the power generated at its optimum point. Moreover, in the event of an emergency, pitch control makes it possible to safely bring the wind generator to a standstill by making the blades rotate to a position in which they are not in opposition to the wind.

Two main technologies are currently used for pitch control systems in wind generators: hydraulic and electric pitch. Hydraulic pitch has been widely used in wind turbines. Recently, however, the installation of higher power wind generators has led to the use of electric pitch control systems, since they offer better regulation and control features than hydraulic systems. Furthermore, electric pitch control systems on the one hand allow a greater versatility when implementing control logics and on the other hand, due to the available monitoring options, provide comprehensive knowledge of the system and the stresses to which the wind generator is subjected.

In the event of a dip or drop in the alternating voltage (grid), current electric pitch systems disconnect the motor from the converter that controls it and connect it directly to the energy storage system (e.g. batteries) so that the speed of the motor cannot be regulated and is determined by the voltage/torque/speed characteristics of the motor.

Examples of these pitch control systems have been disclosed in publications US2007/0057516 A1 and US2006/163882 A1. A control system is implemented in said systems, consisting of connecting the energy storage system to the DC bus of the converter once the voltage drop has been detected. It is thus possible to maintain the voltage level needed to regulate the pitch using the drive during the failure.

The system of the present invention has a novel topology wherein the DC energy storage system or accumulator is not used to charge the DC bus of the converter, but is used to supply the motor directly or via an auxiliary converter that modulates the direct voltage in said accumulator. Thus, if there is a voltage dip or even if the main converter fails, it is possible to continue regulating the position of the blades in a controlled manner, maintaining at all times the possibility of directly applying the voltage from the DC energy storage system to the motor in an emergency.

### SUMMARY OF THE INVENTION

The present invention relates to pitch control systems for wind generators. Said system consists of a DC motor and a reliable and robust topology that does not have an intermediate DC stage (BUS) and includes a new architecture to control the system in the event of failures such as a voltage dip. The energy storage system can consist of batteries or supercapacitors, for example.

In normal operation, the pitch control system works using a main converter to control the motor. In one example of embodiment the motor is controlled in response to instructions received from the general controller.

According to a first aspect of the invention, in the event of a failure, an auxiliary converter takes control of the motor using the energy stored in the batteries or supercapacitors, which makes it possible follow the instructions from the general controller or even to implement certain speed/time curves.

According to another aspect of the invention, it can be operated in the event of certain failures by directly connecting the energy storage system to the motor in a controlled manner, thus making it possible to regulate the position to which the blades move.

According to another aspect of the invention, the batteries or supercapacitors would be connected directly to the motor without the involvement of the pitch controller in the event of an emergency, e.g. a loss of control.

It must be taken into account that both this general description and the detailed description given below provide a non-limiting example and explanation of the invention, as claimed.

### BRIEF DESCRIPTION OF THE FIGURES

The figures shown herein include some that are part of one or more embodiments. However, they must not be considered figures that specifically limit the invention to the illustrated embodiment. The invention and its mode of operation will be better understood from the detailed description, as it includes the following figures:

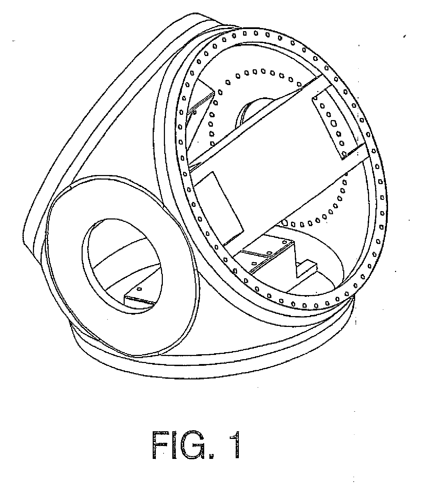

Figure 1: Shows a conventional electric pitch system in a wind generator.
Figure 2: Shows an embodiment of the pitch system of the present invention using a DC series motor.
Figure 3: Shows a configuration of the pitch system of the present invention for the first mode of operation (normal).
Figure 4: Shows a configuration of the pitch system of the present invention for a second mode of operation (failure), wherein the motor is controlled by an auxiliary converter.
Figure 5: Shows a configuration of the pitch system of the present invention for the third mode of operation (failure) in which the motor is actuated by means of the energy storage system governed by the pitch controller until the blade reaches a position desired by the control system.
Figure 6: Shows a configuration of the pitch system of the present invention for the fourth mode of operation (emergency) in which the motor is directly connected to the DC energy storage system until the blade reaches the safety position (normally close to 90º).
Figure 7: Shows a configuration of the pitch system of the present invention wherein the voltage level of the DC energy storage system can be configured to introduce a larger or smaller number of batteries or supercapacitors.
Figure 8: Shows a configuration of the pitch system of the present invention wherein the DC energy storage system is charged and/or discharged by means of the main converter to the desired voltage level.

### DETAILED DESCRIPTION

An electric pitch control system with several examples of embodiments is described below. The description makes reference to the figures as an example to ensure a better understanding of the invention. Different reference numbers will therefore be used throughout the description to refer to different parts of the system of the invention.

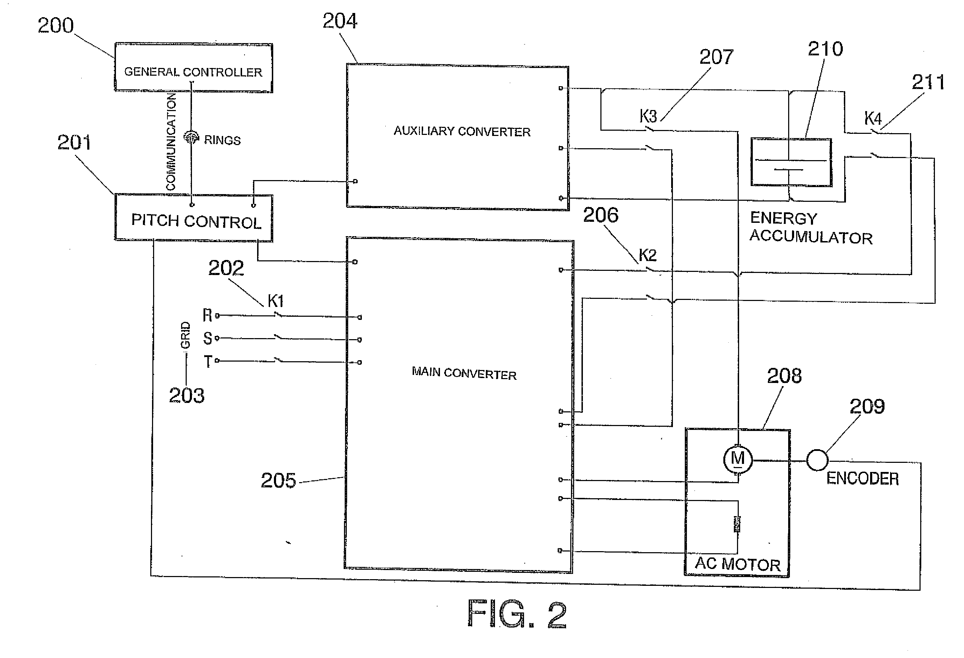

The preferred embodiment of the invention is shown schematically in Figure 2. The pitch control system basically consists of at least one pitch controller (201), a main converter (205), at least one auxiliary converter (204), a DC gear motor (hereinafter motor) (208) and a DC energy storage system or accumulator (210) consisting of batteries or supercapacitors.

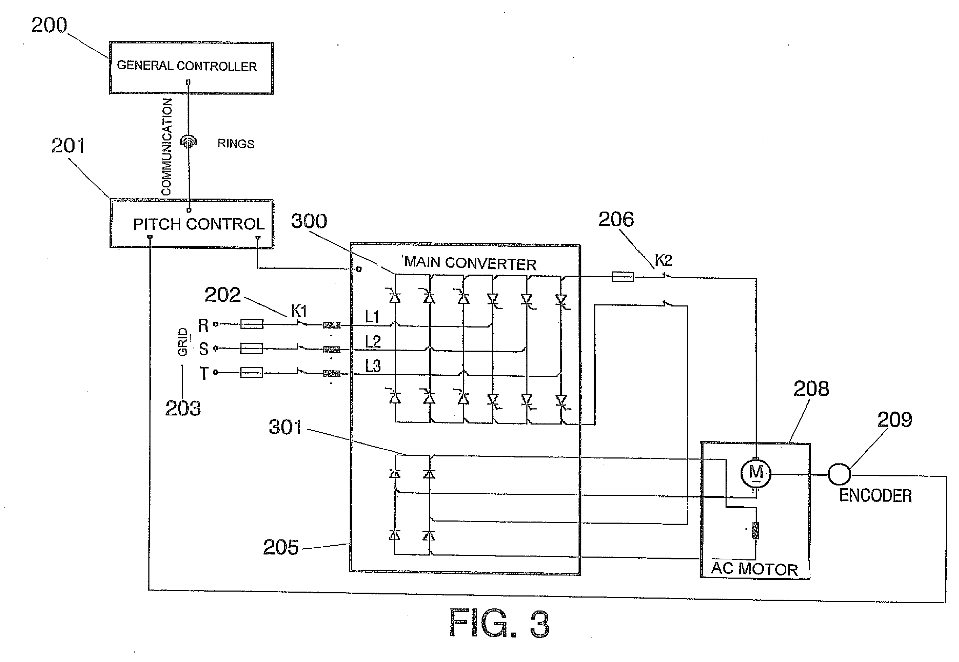

In normal operation (Figure 3) the system would work in what we call a first mode of operation. In this case, contactors K1 (202) and K2 (206) remain closed so that the armature of the motor is controlled by the main converter (205), which inverts the grid voltage to supply the motor in DC (208), applying the corresponding torque at all times so that the blades move to the desired position. Contactors K3 (207) and K4 (211) remain open. In a preferred embodiment of the invention, said main converter is based on thyristors (300). This converter does not have a DC bus.

The excitation of the motor would be controlled by a diode bridge (301). At this stage the configuration of the system makes it possible to regulate the speed, achieving over 0.05% precision. This is done using feedback from the motor encoder (209). In other embodiments the speed and/or position feedback could be provided by another type of sensor (e.g. tachometric dynamo, resolver, etc.). In another embodiment, the position could be regulated.

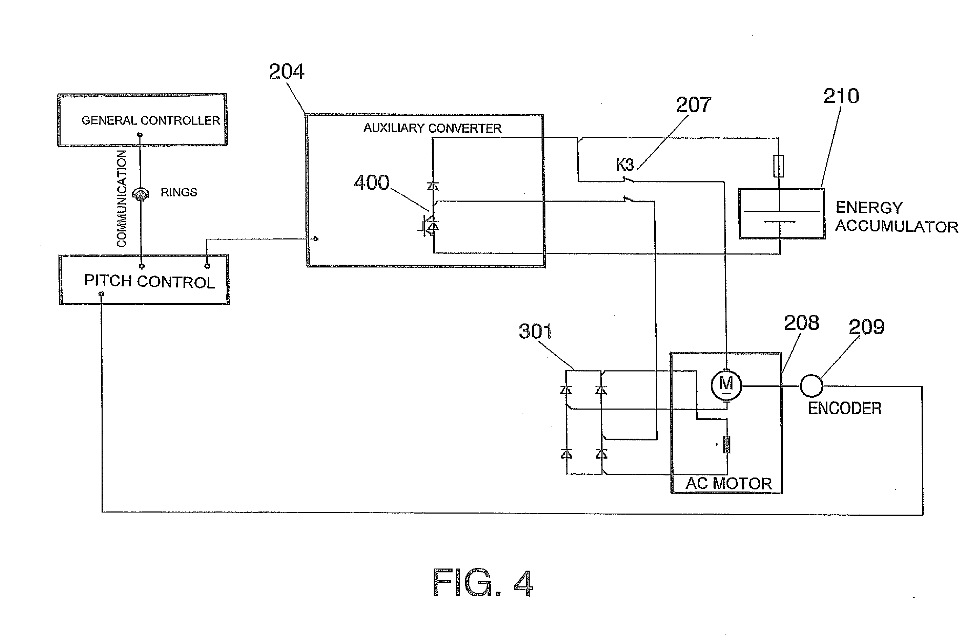

A further three modes of operation are distinguished in the present invention: 1.- The second mode of operation is shown in Figure 4 and corresponds to the system's behaviour in the event of failures. In a non-limiting embodiment, failures are considered to be general alarms of the wind generator in which the system can maintain control over the pitch or position of the blades. This mode of operation is used e.g. during voltage dips. In order to maintain a controlled regulation of the motor and hence the position of the blades and speed of rotation of the wind generator, an auxiliary converter (204) takes control of the motor. This is done by opening contactor K2 (206) and closing K3 (207), whilst K4 (211) is kept open. According to one aspect of the invention, the auxiliary converter is independent of the main converter and modulates the DC voltage supplied by the energy storage system. In one embodiment, this auxiliary converter is based on IGBTs (400).

The desired pitch can therefore be maintained as a response to the instruction determined by the turbine's general controller at any given time or even apply a stop or brake sequence using a certain curve. This curve could be parameterised in the pitch controller.

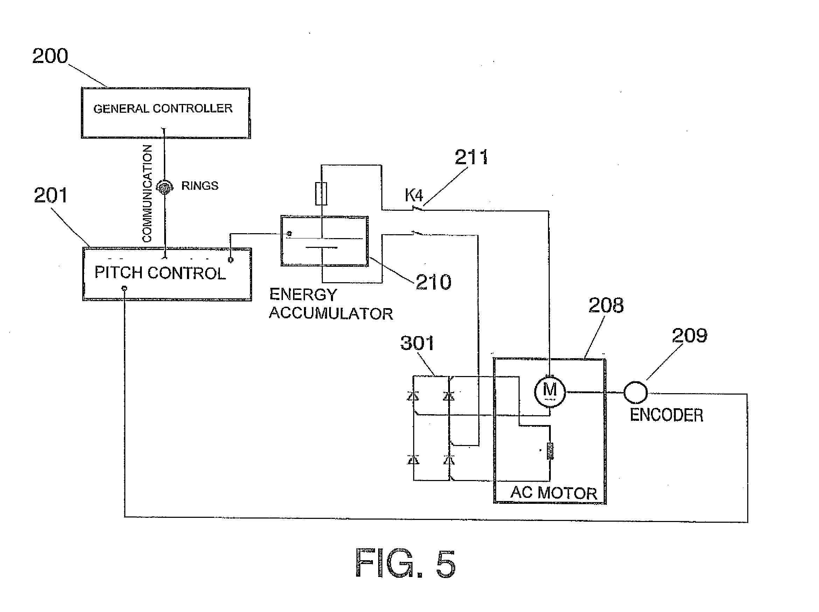

In a third mode of operation, and in order to perform controlled stops, another aspect of the invention can be considered. In one embodiment, the energy storage system can be directly connected to the motor in a controlled manner (Figure 5). Thus, the application time and therefore the final position of the blades is regulated by the pitch controller (201) following a certain logic or following the instructions received from the wind generator's general controller (200). This third mode is also valid for operation in the event of failures like those of the second mode of operation. According to a non-limiting aspect of the invention, it is possible to establish two levels of failures. In the case of first-level failures, the system would apply the second mode of operation. If a second-level failure was detected, the system would work in a third mode of operation.

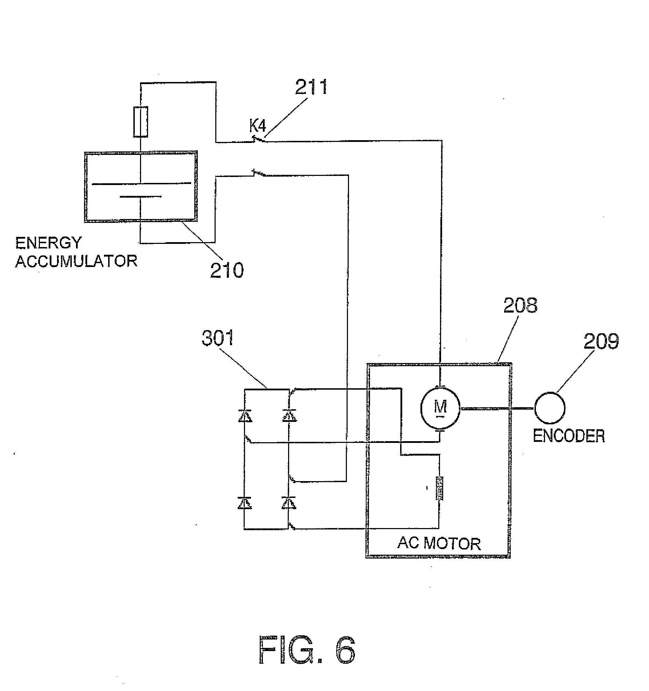

2.- The fourth mode of operation is shown in Figure 6 and is activated in the event of an emergency. In a non-limiting embodiment of the invention an emergency can be considered to be a complete loss of control due to e.g. a fault in the electronics of the pitch system or any of the causes that activate the emergency circuit for safety reasons. In this case, the motor (208) would be directly connected to the energy storage system or energy accumulator (210). This is done by opening K2 (206) and K3 (207) and closing K4 (211). These contactors remain locked until the safety position is reached. Being a DC motor, the rotation speed of the motor is determined by the direct voltage applied.

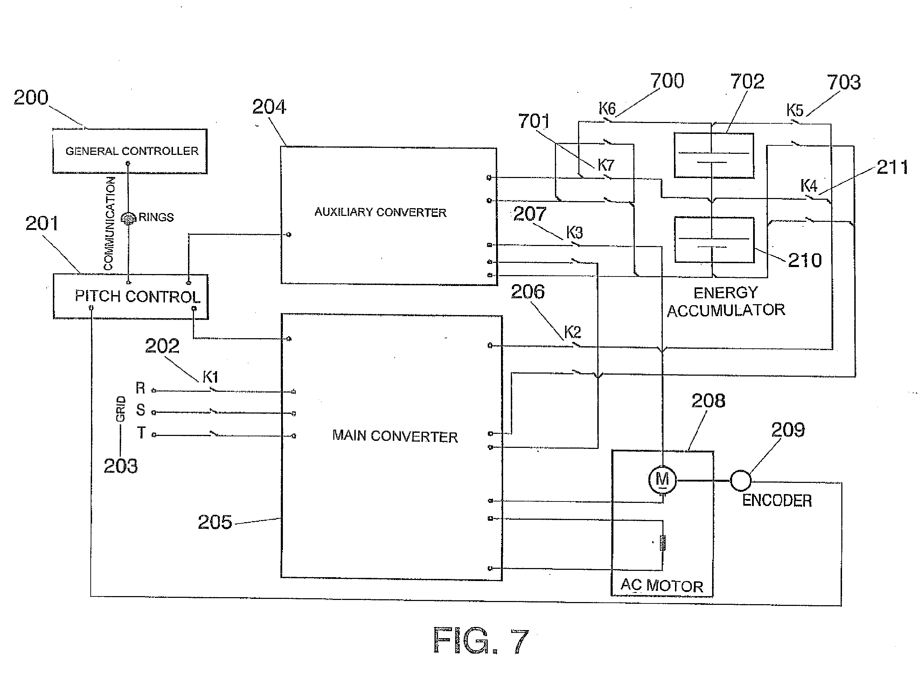

Another aspect of the present invention is that the number of batteries or supercapacitors (210) can be configured so that different voltage levels can be applied according to the desired speed curve bearing in mind the voltage/torque/speed characteristic with which the motor is designed. Figure 7 shows a simple embodiment in which it is possible to introduce a larger number of batteries or supercapacitors (702) by means of contactors. This functionality can be used in the second, third and fourth modes of operation, which make use of the energy accumulator system. In the second mode of operation this functionality is achieved by activating contactor K6 (700) or K7 (701). For the third and fourth modes of operation, in which the voltage from the DC energy accumulator system is directly applied to the motor, this functionality is achieved by activating contactor K5 (703) or K4 (211).

In a preferred embodiment of the invention, the system's main converter is designed with a four-quadrant topology that makes it possible to deliver power to the AC grid when the motor is used as a generator. This situation takes place when the blade of the wind generator moves to the desired position without being actuated by momentum. This can occur when the weight of the blade pushes the blade in the desired direction of rotation.

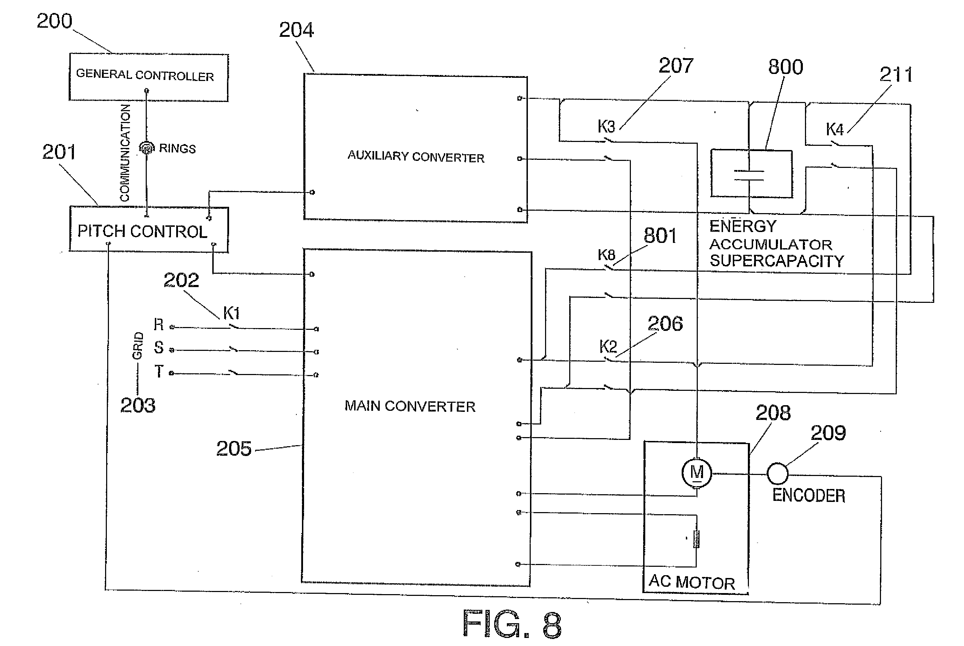

According to another aspect of the invention, the main converter (205) can be used to charge and discharge the energy accumulator system if it is based on supercapacitors. Figure 8 shows an embodiment of the pitch control system that includes contactor K8 (801), which must be actuated to charge or discharge the supercapacitors (800).

If the accumulator system consists of batteries, the system of the present invention requires a battery charger. In a preferred embodiment of the invention, the pitch system uses a single battery charger for all the blades of the wind generator. Said charger multiplexes in time to charge the accumulator system of each of the blades. In another embodiment, one battery charger is used for each blade system.

Therefore, the electric pitch control system disclosed herein has a new feature that increases the possibilities for controlling the DC motor, even in the event of a voltage dip or any other failure.

It must be taken into account that the detailed description must only be taken as an example. The details and figures shown must not limit the scope of the invention. In fact, modifications and adaptations may be made and the above-described methods and embodiments may be replaced by other equivalent ones. Consequently, the invention may be implemented in several ways without this affecting the essence and scope of the invention and it must be understood that the invention is not limited to the embodiments herein.

## Claims

1. A pitch control system for wind turbines, which comprises:
at least one DC motor (208),
at least one pitch controller (201),
a main converter (205) to convert AC power from the grid to DC power to supply the motor in a first mode of operation,
at least one DC power accumulator system (210) for a reserve power supply for a second, third and fourth mode of operation,
at least one auxiliary converter (204) to modulate the direct voltage from the energy accumulator system in a second mode of operation.

2. A pitch control system for wind turbines according to claim 1, **characterised in that** the motor is a DC series excitation motor.

3. A pitch control system for wind turbines according to claim 1, **characterised in that** the motor is a DC compound excitation motor.

4. A pitch control system for wind turbines according to claim 1, **characterised in that** the main converter is based on thyristors.

5. A pitch control system for wind turbines according to claim 1, **characterised in that** the main converter is based on IGBTs.

6. A pitch control system for wind turbines according to claim 1, **characterised in that** it contains a diode-controlled rectifier to supply the excitation of the motor.

7. A pitch control system for wind turbines according to claim 1, **characterised in that** it contains an IGBT-controlled rectifier to supply the excitation of the motor.

8. A pitch control system for wind turbines according to claim 1, **characterised in that** the energy accumulator consists of batteries.

9. A pitch control system for wind turbines according to claim 1, **characterised in that** the energy accumulator consists of supercapacitors.

10. A pitch control system for wind turbines according to claim 1, **characterised in that** the auxiliary converter is based on IGBTs.

11. A pitch control system for wind turbines according to claim 1, **characterised in that** the voltage level of the energy accumulator system can be configured.

12. A pitch control system for wind turbines, which comprises an energy accumulator system in which the voltage level can be actively configured using contactors.

13. A control method for an electric pitch system for wind turbines, which comprises:
- using a main converter to convert AC power from the grid to DC power to supply the DC motor during a first mode of operation,
- using the direct voltage from the energy accumulator to supply the DC motor via the auxiliary converter during a second mode of operation,
- using the direct voltage from the energy accumulator to directly supply the DC motor in a controlled manner during a third mode of operation,
- using the direct voltage from the energy accumulator to directly supply the DC motor without the involvement of the pitch controller during a fourth mode of operation.

14. The control method according to claim 13, **characterised in that** it uses a rectifier to supply the excitation of the DC motor.

15. The control method according to claim 13, **characterised in that** the first mode of operation is activated in normal operation.

16. The control method according to claim 13, **characterised in that** the second mode of operation is activated when a first level of failure is detected.

17. The control method according to claim 13, **characterised in that** the third mode of operation is activated when a second level of failure is detected.

18. The control method according to claim 13, **characterised in that** the fourth mode of operation is activated when an emergency is detected and the blades of the wind generator are moved to the safety position.

19. The control method according to claim 13, **characterised in that** during the second and third modes of operation the DC motor is regulated in response to the instruction received from the general controller.

20. The control method according to claim 13, **characterised in that** during the second and third modes of operation the DC motor is regulated according to a logic programmed in the pitch controller.

21. A control method for an electric pitch system for wind turbines, which comprises:
- using a main converter to convert AC power from the grid to DC power to supply the DC motor during a first mode of operation,
- using the direct voltage from the energy accumulator to supply the DC motor via the auxiliary converter during a second mode of operation,
- using the direct voltage from the energy accumulator to directly supply the DC motor without the involvement of the pitch controller during a fourth mode of operation.

22. A control method for an electric pitch system for wind turbines, which comprises:
- using a main converter to convert AC power from the grid to DC power to supply the DC motor during a first mode of operation,
- using the direct voltage from the energy accumulator to directly supply the DC motor in a controlled manner during a third mode of operation,
- using the direct voltage from the energy accumulator to directly supply the DC motor without the involvement of the pitch controller during a fourth mode of operation.

23. A control method for an electric pitch system for wind turbines, which comprises using the motor as a generator to supply power to the grid when the blade is moved by its own weight or torque towards the desired position.

24. A control method for an electric pitch system for wind turbines, which comprises:
- using a main converter to charge and discharge the supercapacitor-based energy accumulator system.

25. A control method for an electric pitch system for wind turbines, which comprises:
- using a single battery charger and multiplexing to charge the energy accumulator system of each of the blades.
